# EUROPÄISCHE PATENTSCHRIFT

(11) **EP 1 467 117 B1**
(45) Veröffentlichungstag und Bekanntmachung des Hinweises auf die Patenterteilung: **21.12.2005**
(21) Anmeldenummer: 04004183.2
(22) Anmeldetag: 25.02.2004
(51) Int. Cl.: F16F 9/04

(54) **Luftfederbein**
Air spring strut
Jambe de ressort pneumatique

(30) Priorität: 10.04.2003 DE 10316761
(43) Veröffentlichungstag der Anmeldung: 13.10.2004
(73) Patentinhaber: Continental Aktiengesellschaft, 30165 Hannover (DE)
(72) Erfinder: Behmenburg, Christof, Dr., 31867 Lauenau (DE); Oldenettel, Holger, 30900 Wedemark (DE)

(56) Entgegenhaltungen:
- EP-A- 0 516 129
- DE-A- 3 624 296
- US-A- 3 046 003
- US-A- 4 325 541

## Beschreibung

Die Erfindung betrifft ein Luftfederbein nach dem Oberbegriff des Anspruchs 1.

Luftfederbeine für Kraftfahrzeuge sind seit langem in den verschiedensten Ausführungsformen bekannt. Diese bestehen im wesentlichen aus einem Kolbenelement, welches einenends an einem inneren Radträger der Radaufhängung des Kraftfahrzeugs angelenkt und anderenends über eine Luftfeder an der Kraftfahrzeugkarosserie abgestützt ist.

Die Luftfeder selbst kann durch ein Einkammersystem oder ein Mehrkammersystem gebildet sein, wobei sogenannte Rollbälge der Luftfeder sich an der Außenkontur (Wandung) eines Abrollkolbens abstützen.

Einkammersysteme sind beispielsweise durch die DE 36 24 296 A1 und die DE 42 13 676 C2 offenbart. Im Betriebsfall bewegt sich danach ein Abrollkolben innerhalb des Rollbalges der Luftfeder, der sich seinerseits umstülpt und eine Rollfalte ausbildet, die ihrerseits über die Außenkontur des Abrollkolbens abrollt.

Um eine möglichst hohe Federung bzw. Dämpfung zu erzielen, haben sich Mehrkammersysteme bewährt. Aus der DE 24 06 835 A1 ist z. B. ein Zweikammersystem bekannt, bei welchem der zur Verfügung stehende Luftraum durch zwei separate, jedoch über Drosselorgane wie beispielsweise Ventile strömungstechnisch verbundene Luftkammern gebildet ist.

Mit der EP 0 516 129 B1 wird des Weiteren ein Mehrkammersystem, umfassend einen äußeren und einen inneren Rollbalg offenbart, bei dem die Rollbälge entweder gleichgerichtet oder aufeinander zugerichtet auf einem Abrollkolben abrollen.
Diese vorstehende Lösungen betreffend Mehrkammersysteme von Luftfedern sind aufwendig in ihrem Aufbau und ihrer Herstellung. Zudem bauen diese relativ groß, welches sich aufgrund der beengten Verhältnisse im Bereich der Radachsen als nachteilig erwiesen hat.

Die US-A-3,046,003 zeigt ein weiteres Mehrkammersystem mit den Merkmalen des Oberbegriffs des Anspruch 1.

Ferner haben sich in der Praxis an Federbeinen angreifende Radaufstands-Querkräfte als besonders nachteilig sowohl für die Lagerungen des Federbeins an sich, als auch für dessen Luftfedern erwiesen, welchen überwiegend durch eine kompaktere Bauweise der Federbeine begegnet wird.

Um einen Ausgleich der Radaufstands-Querkräfte zu realisieren, wird mit der DE 36 24 296 A1 ein Einkammersystem vorgeschlagen, bei dem den besagten Radaufstands-Querkräften entgegenwirkende Querkräfte derart erzeugt werden, dass der Rollbalg sich an einem Schild abstützt. Durch diese Maßnahme soll einer Ausdehnung des Rollbalges in Richtung der sich nachteilig auswirkenden Querkräfte entgegengewirkt werden. Das Schild umfasst dabei den Rollbalg in einem Umfangsbereich von bis zu 180°, vorzugsweise jedoch von 90°.

Diese Lösung mag für Einkammersysteme zufriedenstellende Ergebnisse bringen. Was Mehrkammersysteme anbelangt, bauen diese im Verhältnis länger, wodurch, für den Fachmann leicht nachvollziehbar, erheblich höhere Kräfte auf die Luftfeder beziehungsweise deren Lagerung wirken. Hier setzt die nachfolgende Erfindung an.

Die Aufgabe der Erfindung ist es daher, ein verbessertes Luftfederbein mit einer Luftfeder nach dem Zweikammersystem zu schaffen, welches einfach und kostengünstig in der Herstellung ist, sowie eine geringere Bauhöhe als herkömmliche Luftfederbeine aufweist. Zudem soll das Luftfederbein eine hohe Quersteifigkeit aufweisen und wirkungsvoll den nachteiligen Radaufstands-Querkräften begegnen.

Die Aufgabe wird bei einem erfindungsgemäßen Luftfederbein mit den Merkmalen des Anspruchs 1 dadurch gelöst, dass deren Luftfeder über einen äußeren Hohlzylinder und einen inneren Hohlzylinder verfügt, dass innerhalb des inneren Hohlzylinders ein mit dem äußeren Hohlzylinder verbundenes Kolbenelement angeordnet ist, dass zwischen dem äußeren Hohlzylinder und dem inneren Hohl-zylinder sowie zwischen dem inneren Hohlzylinder und dem Kolbenelement jeweils ein Rollbalg angeordnet ist, der eine äußere Luftkammer beziehungsweise eine innere Luftkammer abdichtet, dass der innere Hohlzylinder mit der Radaufhängung gelenkig verbunden ist
und dass die äußere Luftkammer und die innere Luftkammer exzentrisch zueinander angeordnet sind.

Mit vorstehender Lösung wurde ein Luftfederbein geschaffen, welches in besonders vorteilhafter Weise eine hohe Federung beziehungsweise Dämpfung aus dem Mehrkammersystem mit einer wirkungsvollen Quersteifigkeit kombiniert. Durch die exzentrische Anordnung der beiden Luftkammern zueinander kann definiert störenden Radaufstands-Querkräften entgegengewirkt werden, woraus im Ergebnis ein verbessertes Fahrverhalten und eine längere Standzeit derart ausgebildeter Luftfederbeine resultiert.

Als weiterer Vorteil wird gesehen, dass das vorgeschlagene Luftfederbein aufgrund der Führung der beiden Hohlzylinder ineinander relativ kurz baut und demgemäss weniger Bauraum benötigt als herkömmliche Luftfederbeine mit einem Mehrkammersystem.

In einer bevorzugten konstruktiven Ausgestaltung der Luftfeder weist der äußere Hohlzylinder einen unteren Abschnitt mit Öffnungen auf, durch die Streben des inneren Hohlzylinders axialbeweglich ragen. Zudem wird es als vorteilhaft angesehen, wenn das Kolbenelement mit dem unteren Abschnitt des äußeren Hohlzylinders in einem Bereich verbunden ist, der sich radial gesehen zwischen den genannten Öffnungen befindet. Durch diese Konstruktion ist die Luftfeder besonders kompakt aufgebaut.

Wenngleich die Öffnungen in dem unteren Abschnitt des äußeren Hohlzylinders beinahe beliebig ausgerichtet sein können, wird es bevorzugt, wenn diese achsparallel zur Längserstreckung der Luftfeder ausgerichtet sind.

In einer Ausgestaltung der Erfindung sind zur Realisierung einer Ventilation des Luftvolumens zwischen den beiden Luftkammern dieselben über Bohrungen und/oder Ventile strömungstechnisch miteinander verbunden.

Ferner wird vorgeschlagen, dass an der Kraftfahrzeugkarosserie und/oder am oberen Ende des äußeren Hohlzylinders und/oder des Kolbenelements wenigstens ein Federelement zur Aufnahme von Anschlagkräften beziehungsweise zur Aufnahme der maximalen Kraft beim Durchfedern des Luftfederbeins angeordnet ist. Zweckmäßigerweise bestehen diese Federelemente aus einem federelastischen Material.

Die Erfindung wird nachstehend anhand eines in den Zeichnungen schematisch dargestellten Ausführungsbeispieles näher erläutert. Es zeigen:
- Fig. 1: die Radaufhängung eines Kraftfahrzeugs mit dem erfindungsgemäßen Luftfederbein,
- Fig. 2: den Querschnitt I-I durch das Luftfederbein gemäß Fig. 1.

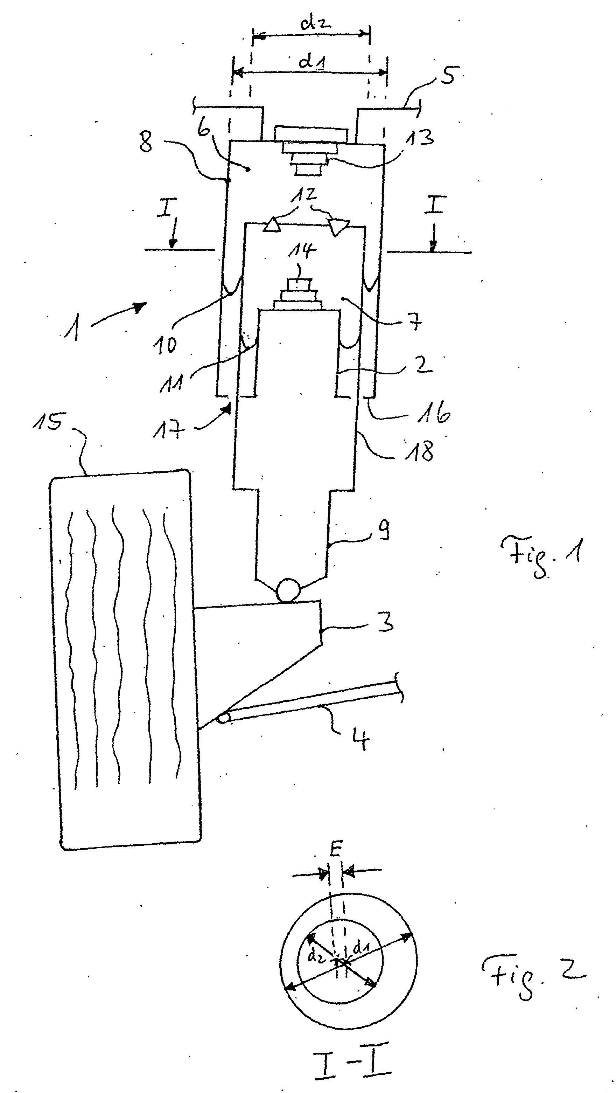

Fig. 1 zeigt ein Rad 15, das über einen Radträger 3 und ein Luftfederbein mit einer Luftfeder 1 an der Karosserie 5 eines Kraftfahrzeuges abgestützt ist. An dem Radträger 3 ist zudem ein Querlenker 4 angelenkt.

Die Luftfeder 1 ist als Zweikammerluftfeder ausgebildet, bei der zwei Hohlzylinder 8, 9 axial verschiebbar ineinander angeordnet sind. Die äußere der beiden Luftkammern 6, 7 ist durch die Innenwand des äußeren Hohlzylinders 8 und die Außenwand des inneren Hohlzylinders 9 gebildet, die über einen elastischen Rollbalg 10 axial verschiebbar miteinander verbunden und abgedichtet sind.

Darüber hinaus weist der äußere Hohlzylinder 8 einen unteren Abschnitt 16 mit Öffnungen 17 auf, durch die Streben 18 des inneren Hohlzylinders 9 längsverschieblich geführt sind. Der untere Abschnitt 16 ist zudem mit einem Kolbenelement 2 verbunden, das in den oberen Abschnitt des inneren Hohlzylinders 9 hineinragt. Dabei bildet die Außenwand dieses Kolbenelementes 2 zusammen mit der Innenwand des oberen Abschnittes des inneren Hohlzylinders 9 die zweite, innere Luftkammer 7, die durch einen die genannten Wände abdichtenden Rollbalg 11 axial verschieblich miteinander verbunden sind.

Um eine Ventilation des Luftvolumens zwischen der äußeren und der inneren Luftkammern 6, 7 zu gewährleisten, sind dieselben über Bohrungen und/oder Ventile 12 strömungstechnisch miteinander verbunden.

Wie der Fig. 1 weiter zu entnehmen ist, ist der innere Hohlzylinder 9 derart axial verschieblich im äußeren Hohlzylinder 8 angeordnet, dass beim Einfedern der Luftfeder 1 der innere Hohlzylinder 9 in den Rollbalg 10 des äußeren Hohlzylinders 8 eindringt, wodurch sich eine Rollfalte ausbildet, mit welcher der Rollbalg 10 zwischen der Wandung des äußeren Hohlzylinders 8 und der Wandung des inneren Hohlzylinders 9 sich abstützend abrollt.

Gleichfalls dringt das Kolbenelement 2 in den Rollbalg 11 des inneren Hohlzylinders 9 ein, wodurch ebenfalls eine Rollfalte ausbildet wird, mit welcher der Rollbalg 11 zwischen der Wandung des inneren Hohlzylinders 9 und der Wandung des Kolbenelementes 2 sich abstützend abrollt.

Es versteht sich für den Fachmann von selbst, dass der Durchmesser d₂ des inneren Hohlzylinders 9 derart geringer als der Durchmesser d₁ des äußeren Hohlzylinders 8 zu wählen ist, dass zum einen der innere Hohlzylinder 9 im äußeren Hohlzylinder 8 axial bewegt werden kann, zum anderen aber auch ein ungehindertes Abrollen der sich bildenden Rollfalte mit einer entsprechend hohen Abstützung derselben zwischen den beiden Wandungen gewährleistet ist. Gleiches ist im Verhältnis zwischen dem inneren Hohlzylinder 9 und dem Kolbenelement 2 zu bemerken und ist auch bei der exzentrischen Anordnung der beiden Hohlzylinder 8, 9 zu beachten.

Im Ergebnis ist schon allein durch die radiale Abstützung beider Rollbälge 10, 11 in alle Richtungen eine hohe Quersteifigkeit des gesamten Systems gewährleistet. Wesentlich verbessert ist diese Abstützung noch dadurch, dass die beiden Luftkammern 6, 7 beziehungsweise die Hohlzylinder 8, 9 nicht koaxial, sondern wie Fig. 2 zeigt, exzentrisch zueinander angeordnet sind.

Durch diese Maßnahme kann, wie bereits oben dargelegt, vorteilhaft störenden Radaufstands-Querkräften entgegengewirkt werden, indem auf das Kolbenelement 2 eine geeignete, der Radaufstands-Querkraft entgegengerichtete Querkraft erzeugt wird.

Durch die Wahl der in Fig. 2 gezeigten Exzentrizität "E", also dem Versatz der Längsachsen der beiden Hohlzylinder 8, 9 zueinander, kann die entgegengerichtete Querkraft in Grenzen definiert eingestellt werden.

Vorstehendes Kolbenelement 2 ist vorliegend als Festkolben dargestellt. Jedoch kann es auch angezeigt sein, statt eines Festkolbens einen an sich bekannten Stoßdämpfer in Anwendung zu bringen, wodurch eine sogenannte Feder-Dämpfer-Einheit gebildet ist, die ihrerseits besonders günstige Federungs- und Dämpfungseigenschaften aufweist (nicht näher dargestellt).

Wie aus Fig. 1 noch ersichtlich ist, sind korrespondierend zueinander an der Kraftfahrzeugkarosserie 5 und am Kolbenelement 2 je ein Federelement 13, 14 angeordnet, die vorzugsweise aus einem an sich bekannten federelastischen Material gefertigt sind. Durch diese Federelemente 13, 14 können maximale Anschlagkräfte beziehungsweise maximale Kräfte beim Durchfedern des Luftfederbeins elastisch aufgenommen werden.

### Bezugszeichenliste

- 1: Luftfeder
- 2: Kolbenelement
- 3: Radträger
- 4: Querlenker
- 5: Kraftfahrzeugkarosserie
- 6: Äußere Luftkammer
- 7: Innere Luftkammer
- 8: Äußerer Hohlzylinder
- 9: Innerer Hohlzylinder
- 10: Äußerer Rollbalg
- 11: Innerer Rollbalg
- 12: Ventile
- 13: Federelement
- 14: Federelement
- 15: Rad
- 16: Unterer Abschnitt des äußeren Hohlzylinders
- 17: Öffnung
- 18: Strebe
- d₁: Durchmesser des äußeren Hohlzylinders 8
- d₂: Durchmesser des inneren Hohlzylinders 9
- E: Achsexzentrizität zwischen äußeren und inneren Hohlzylinder 8, 9

## Patentansprüche

1. Luftfederbein, umfassend eine Luftfeder (1), welche einenends an einem inneren Radträger (3) der Radaufhängung eines Kraftfahrzeugs angelenkt ist und sich anderenends über eine Luftfeder (1) an der Kraftfahrzeugkarosserie (5) abstützt, wobei
die Luftfeder (1) über einen äußeren Hohlzylinder (8) und einen inneren Hohlzylinder (9) verfügt, und
innerhalb des inneren Hohlzylinders (9) ein mit dem äußeren Hohlzylinder (8) verbundenes Kolbenelement (2) angeordnet ist, und
zwischen dem äußeren Hohlzylinder (8) und dem inneren Hohlzylinder (9) sowie zwischen dem inneren Hohlzylinder (9) und dem Kolbenelement (2) jeweils ein Rollbalg (10; 11) eine äußere Luftkammer (6) beziehungsweise eine innere Luftkammer (7) abdichtend angeordnet ist, und
der innere Hohlzylinder (9) mit der Radaufhängung (3) gelenkig verbunden ist, **dadurch gekennzeichnet, dass** die äußere Luftkammer (6) und die innere Luftkammer (7) exzentrisch zueinander angeordnet sind.

2. Luftfederbein nach Anspruch 1, **dadurch gekennzeichnet, dass** der äußere Hohlzylinder (8) einen unteren Abschnitt (16) aufweist, dass in diesem unteren Abschnitt (16) Öffnungen (17) ausgebildet sind, und dass durch die Öffnungen (17) Streben (18) des inneren Hohlzylinders (9) axialbeweglich ragen.

3. Luftfederbein nach Anspruch 1 oder Anspruch 2, **dadurch gekennzeichnet, dass** das Kolbenelement (2) mit dem unteren Abschnitt (16) des äußeren Hohlzylinders (8) in einem Bereich verbunden ist, der sich radial gesehen zwischen den Öffnungen (17) befindet.

4. Luftfederbein nach Anspruch 2 oder Anspruch 3, **dadurch gekennzeichnet, dass** die Öffnungen (17) achsparallel zur Längserstreckung der Luftfeder (1) ausgerichtet sind.

5. Luftfederbein nach einem der vorherigen Ansprüche, **dadurch gekennzeichnet, dass** zur Realisierung einer Ventilation des Luftvolumens zwischen den beiden Luftkammern (7; 8) dieselben über Bohrungen und/oder Ventile (12) strömungstechnisch miteinander verbunden sind.

6. Luftfederbein nach einem der vorherigen Ansprüche, **dadurch gekennzeichnet, dass** das Kolbenelement (2) durch einen Stoßdämpfer gebildet ist.

7. Luftfederbein nach einem der vorherigen Ansprüche, **dadurch gekennzeichnet, dass** an der Kraftfahrzeugkarosserie (5) und/oder am oberen Ende des äußeren Hohlzylinders (8) und/oder am äußeren Ende des Kolbenelements (2) wenigstens ein Federelement (13; 14) zur Aufnahme von Anschlagkräften beziehungsweise zur Aufnahme der maximalen Kraft beim Durchfedern des Luftfederbeins angeordnet ist.

8. Luftfederbein nach Anspruch 7, **dadurch gekennzeichnet, dass** die Federelemente (13; 14) aus einem federelastischen Material bestehen.

## Claims

1. Air spring leg comprising an air spring (1) which is coupled in an articulated fashion at one end to an internal wheel carrier (3) of the wheel suspension of a motor vehicle and is supported at the other end on the bodywork (5) of the motor vehicle by means of an air spring (1), wherein
the air spring (1) has an external hollow cylinder (8) and an internal hollow cylinder (9), and
a piston element (2) which is connected to the external hollow cylinder (8) is arranged inside the internal hollow cylinder (9), and
in each case a rolling bellows (10; 11), and external air chamber (6) and/or an internal air chamber (7) are arranged in a seal-forming fashion between the external hollow cylinder (8) and the internal hollow cylinder (9) as well as between the internal hollow cylinder (9) and the piston element (2), and
the internal hollow cylinder (9) is connected in an articulated fashion to the wheel suspension (3),
**characterized in that** the external air chamber (6) and the internal air chamber (7) are arranged eccentrically with respect to one another.

2. Air spring leg according to Claim 1, **characterized in that** the external hollow cylinder (8) has a lower section (16), **in that** openings (17) are formed in this lower section (16), and **in that** struts (18) of the internal hollow cylinder (9) project in an axially movable fashion through the openings (17).

3. Air spring leg according to Claim 1 or Claim 2, **characterized in that** the piston element (2) is connected by the lower section (16) of the external hollow cylinder (8) in a region which is located between the openings (17), viewed in the radial direction.

4. Air spring leg according to Claim 2 or Claim 3, **characterized in that** the openings (17) are oriented coaxially with the longitudinal extent of the air spring (1).

5. Air spring leg according to one of the preceding claims, **characterized in that**, in order to ventilate the air volume between the two air chambers (7; 8), said air chambers are flow-connected to one another via bores and/or valves (12).

6. Air spring leg according to one of the preceding claims, **characterized in that** the piston element (2) is formed by a shock absorber.

7. Pneumatic spring leg according to one of the preceding claims, **characterized in that** at least one spring element (13; 14) is arranged on the bodywork (5) of the motor vehicle and/or at the upper end of the external hollow cylinder (8) and/or at the external end of the piston element (2) in order to absorb shock forces and/or to absorb the maximum force during the spring deflection of the air spring leg.

8. Air spring leg according to Claim 7, **characterized in that** the spring elements (13; 14) are composed of a spring elastic material.

## Revendications

1. Jambe de ressort pneumatique comprenant un ressort pneumatique (1) articulé d'un côté sur un support de roue (3) intérieur de la suspension de roue d'un véhicule automobile et s'appuyant de l'autre côté par un ressort pneumatique (1) sur la carrosserie (5) du véhicule automobile,
le ressort pneumatique (1) disposant d'un cylindre creux extérieur (8) et d'un cylindre creux intérieur (9), et
à l'intérieur du cylindre creux intérieur (9) un élément piston (2) étant disposé relié au cylindre creux extérieur (8) et
un soufflet roulant (10; 11) étant disposé entre le cylindre creux extérieur (8) et le cylindre creux intérieur (9) ainsi qu'entre le cylindre creux intérieur (9) et l'élément piston (2) pour étancher une chambre à air extérieure (6) et une chambre à air intérieure (7), et
le cylindre creux intérieur (9) étant articulé avec la suspension de roue (3), **caractérisée en ce que** la chambre à air extérieure (6) et la chambre à air intérieure (7) sont excentrées l'une par rapport à l'autre.

2. Jambe de ressort pneumatique selon la revendication 1, **caractérisée en ce que** le cylindre creux extérieur (8) présente une section inférieure (16), que des ouvertures (17) sont formées dans cette section inférieure (16) et que des montants (18) du cylindre creux intérieur (9) passent de manière mobile dans le sens axial à travers les ouvertures (17).

3. Jambe de ressort pneumatique selon l'une des revendications 1 ou 2, **caractérisée en ce que** l'élément piston (2) est relié à la section inférieure (16) du cylindre creux extérieur (8) dans une région, qui, vue dans le sens radial, se situe entre les ouvertures (17).

4. Jambe de ressort pneumatique selon la revendication 2 ou la revendication 3,
**caractérisée en ce que** les ouvertures (17) sont orientées parallèlement à l'axe de l'extension longitudinale du ressort pneumatique (1).

5. Jambe de ressort pneumatique selon l'une des revendications précédentes, **caractérisée en ce que** pour la réalisation d'une ventilation du volume d'air entre les deux chambres à air (7; 8), ces dernières sont reliées entre elles par des perçages et/ou soupapes (12) de circulation.

6. Jambe de ressort pneumatique selon l'une des revendications précédentes **caractérisée en ce que** l'élément piston (2) est réalisé sous forme d'un amortisseur.

7. Jambe de ressort pneumatique selon l'une des revendications précédentes, **caractérisée en ce que** sur la carrosserie (5) du véhicule automobile et/ou sur l'extrémité supérieure du cylindre creux extérieur (8) et/ou à l'extrémité extérieure de l'élément piston (2) au moins un élément ressort (13; 14) est disposé afin d'absorber des forces de butée ou la force maximale lors de l'écrasement de la jambe de ressort pneumatique.

8. Jambe de ressort pneumatique selon la revendication 7, **caractérisée en ce que** les éléments ressorts (13; 14) sont composés d'un matériau à déformation élastique.
